# EUROPEAN PATENT SPECIFICATION

(11) **EP 2 995 553 B1**
(45) Date of publication and mention of the grant of the patent: **01.02.2017**
(21) Application number: 14184073.6
(22) Date of filing: 09.09.2014
(51) Int. Cl.: B64C 21/08, B64C 21/04, B64D 13/06

(54) **Air generation unit for an aircraft and method for its operation**
Luftgenerator für ein Flugzeug und Verfahren zu seinem Betrieb
Appareil générateur d'air pour aéronef et son procédé de fonctionnement

(43) Date of publication of application: 16.03.2016
(73) Proprietor: Airbus Defence and Space GmbH, 85521 Ottobrunn (DE)
(72) Inventor: Meyer, Michael, 80939 München (DE)
(74) Representative: Kopf Westenberger Wachenhausen Patentanwälte PartG mbB

(56) References cited:
- US-A1- 2003 150 962
- US-A1- 2009 014 593
- US-A1- 2011 131 999

## Description

### FIELD OF THE INVENTION

The invention relates to an air generation unit for an aircraft, an air generation arrangement, an aircraft and a method for operating an air generation unit in an aircraft.

### BACKGROUND OF THE INVENTION

US 2009/014593 A1 discloses a cooling system on board an aircraft including a device for removing by suction a boundary layer, and a heat exchanger through which flows the boundary layer air that has been removed by suction.

US 2003/150962 A1 discloses a method to delay flow separation from a solid body in a fluid stream by coupling a region of a suction peak with a region of adverse pressure gradient.

Multiple devices of an aircraft, as e.g. an air conditioning system or a flow control system need pressurized air which must be provided by some sort of air source. Conventionally, pressurized air is supplied by compressor units or extracted as bleed-air from turbofan engines. However, this supply of air can be improved. For example, compressors units have significant implications on aircraft weight, while a coupling to turbofan engines is unfavorable from a performance point of perspective.

### SUMMARY OF THE INVENTION

Hence, there may be a need to provide an improved air generation unit for an aircraft, which allows reducing the aircraft's weight.

The problem of the present invention is solved by the subject-matters of the independent claims, wherein further embodiments are incorporated in the dependent claims. It should be noted that the aspects of the invention described in the following apply also to the air generation unit for an aircraft, the air generation arrangement, the aircraft and the method for operating the air generation unit in the aircraft.

According to the present invention, an air generation unit for an aircraft is presented. The air generation unit for an aircraft comprises an air supply means and a control unit. The air supply means is configured to supply air to an air conditioning system of an aircraft's cabin. The air supply means is further or alternatively configured to supply air to a flow control system of an aircraft. The control unit is configured to provide, during cruise conditions of the aircraft, a larger amount of the air to the air conditioning system than to the flow control system. The control unit is further configured to provide, during take-off and/or landing conditions of the aircraft, a larger amount of the air to the flow control system than to the air conditioning system.

Thereby, the present invention provides an integrated unit for cabin-air conditions/pressurization and flow control air supply. In other words, the air generation unit is used for cabin pressurization and air conditioning, as well as for flow control air supply. This double-use of infrastructure provides a weight benefit for the aircraft. Further, a decoupling from the compressor units and the turbofan engines is possible.

During take-off and landing, pressurization and air-conditioning is needed at a much lower extent than during cruise, sometimes even switched off, so that the air generation unit can be used for supplying pressurized air to the flow control. During cruise, however, flow control is needed at a much lower extent than during take-off and landing, sometimes switched off, so that the air generation unit can be used for supplying pressurized air to the air conditioning system. As a result, the air generation unit can be dimensioned according to cruise requirements.

The flow control system may be utilized, e.g., in order to prevent flows from separating or detaching from an airfoil portion or from another flow body, or to reattach a flow that has already detached or separated from the airfoil portion or other flow body. The flow control system may be also configured to provide boundary layer suction to inhale the detaching or detached boundary layer or to prevent laminar turbulent transition for better drag during cruise. Thereby, the flow control can lead to an increased lift by eliminating separations, while holding the angle of attack constant, or by delaying the stall of a particular surface to higher degrees of flow incidence, consequently increasing the lift as well.

The airfoil may be a flap, a wing, a winglet, a vertical or horizontal tail plane, a slat, a tap, a control surface, a mounting surface, a landing gear and/or a fuselage portion. In other words, the flow control system of the airfoil portion can be any part where separation of air flows occurs or where it is desired to suppress laminar turbulent transition and to reduce friction drag.

In an example, the control unit is configured to provide during cruise conditions between 80 and 100 % of the air to the air conditioning system, preferably between 90 and 100 %, and more preferably between 95 and 100 %. In other words, the air generation unit may be dimensioned for cruise requirements of the air conditioning system.

In an example, the control unit is configured to provide during cruise conditions between 0 and 20 % of the air to the flow control system, preferably between 0 and 10 %, more preferably between 0 and 5 %.

In an example, the control unit is configured to provide during take-off and/or landing conditions between 50 and 100 % of the air to the flow control system, preferably between 60 and 80 %, more preferably between 65 and 75 %.

In an example, the control unit is configured to provide during take-off and/or landing conditions between 0 and 50 % of the air to the air conditioning system, preferably between 20 and 40 %, more preferably between 25 and 35 %.

In an example, the air supply means are provided with air by an air intake at the airfoil. In other words, the air intake is used as suction device to inhale at least parts of the air that is used for cabin pressurization and acclimatization.

In an example, the air supplied to the air conditioning system and/or to the flow control system is pressurized air. The pressurized air may be pressurized in a range between 0 and 5 bar, preferably between 0 and 4 bar.

According to the present invention, also an air generation arrangement for an aircraft is presented. The air generation arrangement for an aircraft comprises an air generation unit as described above and a flow control system for the aircraft.

In an example, the flow control system is an active flow control system and comprises a fluidic actuator configured to provide a steady or unsteady air flow relative to a surface of the airfoil. The air flow relative to the surface of the airfoil portion may be along the surface, orthogonal, tangential or combinations thereof. The air flow may energize a detaching or detached boundary layer at the surface of the airfoil to modify the air circulation of the airfoil to e.g. introduce control moments or to reduce buffeting.

The at least one fluidic actuator maybe realized to provide a pulsed ejection from an opening in the airfoil. The fluidic actuator may utilize valves or other active flow influencing means for the provision of the pulsed flow. The air ejection is able to delay separations to higher flow incident angles by introducing vortical structures, which convect downstream of the airfoil thus energizing the otherwise separated flow area.

In summary, the active flow control system may comprise several openings and at least one fluidic actuator with an inlet connectable to an air source. The openings may be distributed along or parallel to e.g. a leading edge in a side-by-side relationship. The fluidic actuator may be designed such that air from the inlet flows to outlets connected to the openings.

According to the present invention, also an aircraft is presented. The aircraft comprises a cabin with an air conditioning system, an airfoil with a flow control system, and an air generation unit with an air supply means and a control unit as described above. The air supply means is configured to supply air to the air conditioning system and to a flow control system. The control unit is configured to provide, during cruise conditions of the aircraft, a larger amount of the air to the air conditioning system than to the flow control system, and during take-off and/or landing conditions of the aircraft, a larger amount of the air to the flow control system than to the air conditioning system.

In an example, at least parts of the flow control system are arranged at the airfoil. The airfoil may be a flap, an inboard flap, a wing, a winglet, a vertical or horizontal tail plane, a slat, a tap, a control surface, a mounting surface, and/or a fuselage portion.

In an example, the air generation unit is at least partially arranged close to the flow control system. The air generation unit may also be at least partially arranged at the airfoil and/or in a fuselage area next to the airfoil.

In an example, the air supply means are provided with air by an air intake at the airfoil. In other words, the air intake is used as suction device to inhale at least parts of the air that is used for cabin pressurization and acclimatization.

According to the present invention, also a method for operating an air generation unit in an aircraft is presented. It comprises a controlling of air supply to provide, during cruise conditions of the aircraft, a larger amount of the air to an air conditioning system of the aircraft than to a flow control system of the aircraft, and during take-off and/or landing conditions of the aircraft, a larger amount of the air to the flow control system than to the air conditioning system.

It shall be understood the air generation unit for an aircraft, the air generation arrangement, the aircraft and the method for operating an air generation unit in an aircraft according to the independent claims have similar and/or identical preferred embodiments, in particular, as defined in the dependent claims. It shall be understood further that a preferred embodiment of the invention can also be any combination of the dependent claims with the respective independent claim.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the accompanying drawing:

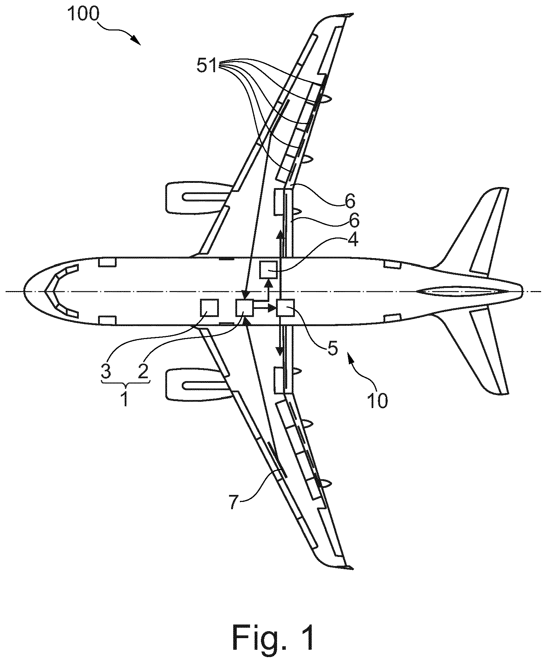

- Fig. 1: shows schematically and exemplarily an aircraft with an air generation arrangement comprising an air generation unit and a flow control system according to the invention.

### DETAILED DESCRIPTION OF EMBODIMENTS

Fig. 1 shows schematically and exemplarily an aircraft 100 with an air generation arrangement 10 according to the invention. The air generation arrangement 10 comprises an air generation unit 1 and a flow control system 5.

The air generation unit 1 comprises an air supply means 2 and a control unit 3 arranged in a fuselage area next to the aircraft's wings. The air supply means 2 supplies air to an air conditioning system 4 of the aircraft's cabin and to the aircraft's flow control system 5. The control unit 3 provides, during cruise conditions of the aircraft 100, a larger amount of the air to the air conditioning system 4 than to the flow control system 5. The control unit 3 further provides, during take-off and/or landing conditions of the aircraft 100, a larger amount of the air to the flow control system 5 than to the air conditioning system 4.

In this embodiment, the control unit 3 provides during cruise conditions between 80 and 100 % of the air to the air conditioning system 4 and between 0 and 20 % of the air to the flow control system 5. During take-off and/or landing conditions, the control unit 3 provides between 50 and 100 % of the air to the flow control system 5 and between 0 and 50 % of the air to the air conditioning system 4.

The flow control system 5 is here an active flow control system arranged close to the air generation unit 1. The flow control system 5 comprises fluidic actuators 51 arranged at the aircraft's airfoil 6 to provide an air flow along a surface of the airfoil 6. The airfoil 6 is here a flap. The air flow may energize a detaching or detached boundary layer at the surface of the airfoil 6 to modify the air circulation of the airfoil 6 to e.g. introduce control moments or to reduce buffeting. The fluidic actuators 51 provide pulsed ejections from openings (not shown) in the airfoil 6. The openings are distributed along a leading edge of the flap in a side-by-side relationship. For e.g. an A320 type of aircraft, an air flow of 2kg/s and 0.5 bar gauge pressure at the inboard flaps can be used.

The air supply means 2 are here provided with air by air intakes 7 arranged e.g. at outer portions of the aircraft's wings. In other words, the air intake 7 is used as suction device to inhale at least parts of the air that is used for cabin pressurization and acclimatization. The air supplied to the air conditioning system 4 and to the flow control system 5 is pressurized air, here in a range between 0 and 5 bar.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An air generation unit (1) for an aircraft (100), comprising
- an air supply means (2); and
- a control unit (3);
wherein the air supply means (2) is configured to supply air to an air conditioning system (4) of an aircraft's cabin and to a flow control system (5) of the aircraft (100); and
wherein the control unit (3) is configured to provide,
during cruise conditions of the aircraft (100), a larger amount of the air supplied by the air supply means (2) to the air conditioning system (4) than to the flow control system (5), and
during take-off and/or landing conditions of the aircraft (100), a larger amount of the air supplied by the air supply means (2) to the flow control system (5) than to the air conditioning system (4).

2. Air generation unit (1) according to claim 1, wherein the control unit (3) is configured to provide during cruise conditions between 80 and 100 % of the air to the air conditioning system (4), preferably between 90 and 100 %, more preferably between 95 and 100 %.

3. Air generation unit (1) according to claim 1 or 2, wherein the control unit (3) is configured to provide during take-off and/or landing conditions between 50 and 100 % of the air to the flow control system (5), preferably between 60 and 80 %, more preferably between 65 and 75 %.

4. Air generation unit (1) according to one of the preceding claims, wherein the control unit (3) is configured to provide during take-off and/or landing conditions between 0 and 50 % of the air to the air conditioning system (4), preferably between 20 and 40 %, more preferably between 25 and 35 %.

5. Air generation unit (1) according to one of the preceding claims, wherein the air supplied to the air conditioning system (4) and/or to the flow control system (5) is pressurized air.

6. Air generation unit (1) according to the preceding claim, wherein the pressurized air supplied to the air conditioning system (4) is pressurized in a range between 0 and 5 bar, preferably between 0 and 4 bar.

7. Air generation unit (1) according to the preceding claim, wherein the pressurized air supplied to the flow control system (5) is pressurized in a range between 0 and 5 bar, preferably between 0 and 4 bar.

8. An air generation arrangement (10) for an aircraft (100), comprising an air generation unit (1) according to one of the preceding claims and a flow control system (5) for the aircraft (100).

9. Air generation arrangement (10) according to the preceding claim, wherein the flow control system (5) comprises a fluidic actuator configured to provide an air flow relative to a surface of the airfoil (6).

10. An aircraft (100) comprising
- a cabin with an air conditioning system (4),
- an airfoil (6) with a flow control system (5), and
- an air generation unit (1) according to one of the claims 1 to 7.

11. Aircraft (100) according to the preceding claim, wherein the airfoil (6) is a flap, a wing, a winglet, a vertical or horizontal tail plane, a slat, a tap, a control surface, a mounting surface, a landing gear and/or a fuselage portion.

12. Aircraft (100) according to one of the preceding claims, wherein at least parts of the flow control system (5) are arranged at the airfoil (6).

13. Aircraft (100) according to one of the preceding claims, wherein the air generation unit (1) is at least partially arranged close to the flow control system (5), preferably at the airfoil (6) and/or in a fuselage area next to the airfoil (6).

14. Aircraft (100) according to one of the preceding claims, wherein the air supply means (2) are provided with air by an air intake (7) at the airfoil (6).

15. A method for operating an air generation unit (1) in an aircraft (100), comprising a supplying of air and a controlling of air to provide, during cruise conditions of the aircraft (100), a larger amount of the supplied air to an air conditioning system (4) of the aircraft (100) than to a flow control system (5) of the aircraft (100), and
during take-off and/or landing conditions of the aircraft (100), a larger amount of the supplied air to the flow control system (5) than to the air conditioning system (4).

## Patentansprüche

1. Eine Lufterzeugungseinheit (1) für ein Luftfahrzeug (100), aufweisend:
- ein Luftzufuhrmittel (2) und
- eine Steuereinheit (3);
wobei das Luftzufuhrmittel (2) so ausgelegt ist, dass es einer Klimaanlage (4) einer Luftfahrzeugkabine und einem Strömungsregelungssystem (5) des Luftfahrzeugs (100) Luft zuführt; und
wobei die Steuereinheit (3) so ausgelegt ist, dass sie
während des Flugzustands Reiseflug des Luftfahrzeugs (100) der Klimaanlage (4) eine größere Menge der von dem Luftzufuhrmittel (2) zugeführten Luft bereitstellt als dem Strömungsregelungssystem (5) und
während der Flugzustände Start und/oder Landung des Luftfahrzeugs (100) dem Strömungsregelungssystem (5) eine größere Menge der von dem Luftzufuhrmittel (2) zugeführten Luft bereitstellt als der Klimaanlage (4).

2. Lufterzeugungseinheit (1) nach Anspruch 1, wobei die Steuereinheit (3) so ausgelegt ist, dass sie während des Flugzustands Reiseflug zwischen 80 und 100 %, vorzugsweise zwischen 90 und 100 %, bevorzugter zwischen 95 und 100 %, der Luft der Klimaanlage (4) bereitstellt.

3. Lufterzeugungseinheit (1) nach Anspruch 1 oder 2, wobei die Steuereinheit (3) so ausgelegt ist, dass sie während der Flugzustände Start und/oder Landung zwischen 50 und 100 %, vorzugsweise zwischen 80 und 80 %, weiter bevorzugt zwischen 65 und 75 % der Luft dem Strömungsregelungssystem (5) bereitstellt.

4. Lufterzeugungseinheit (1) nach einem der vorhergehenden Ansprüche, wobei die Steuereinheit (3) so ausgelegt ist, dass sie während der Flugzustände Start und/oder Landung zwischen 0 und 50 %, vorzugsweise zwischen 20 und 40 %, weiter bevorzugt zwischen 25 und 35 %, der Luft der Klimaanlage (4) bereitstellt.

5. Lufterzeugungseinheit (1) nach einem der vorhergehenden Ansprüche, wobei die der Klimaanlage (4) und/oder dem Strömungsregelungssystem (5) zugeführte Luft Druckluft ist.

6. Lufterzeugungseinheit (1) nach dem vorhergehenden Anspruch, wobei die der Klimaanlage (4) zugeführte Druckluft unter einem Druck in einem Bereich zwischen 0 und 5 bar, vorzugsweise zwischen 0 und 4 bar, steht.

7. Lufterzeugungseinheit (1) nach dem vorhergehenden Anspruch, wobei die dem Strömungsregelungssystem (5) zugeführte Druckluft unter einem Druck in einem Bereich zwischen 0 und 5 bar, vorzugsweise zwischen 0 und 4 bar, steht.

8. Eine Lufterzeugungsanordnung (10) für ein Luftfahrzeug (100), die eine Lufterzeugungseinheit (1) nach einem der vorhergehenden Ansprüche und ein Strömungsregelungssystem (5) für das Luftfahrzeug (100) aufweist.

9. Lufterzeugungsanordnung (10) nach dem vorhergehenden Anspruch, wobei das Strömungsregelungssystem (5) einen Fluidaktuator aufweist, der so ausgelegt ist, dass er bezogen auf eine Oberfläche des Tragflügels (6) für einen Luftstrom sorgt.

10. Ein Luftfahrzeug (100), aufweisend:
- eine Kabine mit einer Klimaanlage (4),
- eine Tragfläche (6) mit einem Strömungsregelungssystem (5), und
- eine Lufterzeugungseinheit (1) nach einem der Ansprüche 1 bis 7.

11. Luftfahrzeug (100) nach dem vorhergehenden Anspruch, wobei die Tragfläche (6) eine Klappe, ein Flügel, ein Winglet, ein Höhen- oder Seitenleitwerk, ein Vorflügel, eine Anzapfstelle, eine Steuerfläche, eine Montagefläche, ein Fahrwerk und/oder ein Rumpfabschnitt ist.

12. Luftfahrzeug (100) nach einem der vorhergehenden Ansprüche, wobei zumindest Teile des Strömungsregelungssystems (5) an der Tragfläche (6) angeordnet sind.

13. Luftfahrzeug (100) nach einem der vorhergehenden Ansprüche, wobei der Lufterzeugungseinheit (1) zumindest teilweise nahe an dem Strömungsregelungssystem (5), vorzugsweise an der Tragfläche (6) und/oder in einem Rumpfbereich neben der Tragfläche (6), angeordnet ist.

14. Luftfahrzeug (100) nach einem der vorhergehenden Ansprüche, wobei die Luftzufuhrmittel (2) über eine Lufteintrittsöffnung (7) an der Tragfläche (6) mit Luft versorgt werden.

15. Ein Verfahren zum Betreiben eines Lufterzeugers (1) in einem Luftfahrzeug (100), aufweisend ein Zuführen von Luft und ein Regulieren von Luft, damit während des Flugzustands Reiseflug des Luftfahrzeugs (100) einer Klimaanlage (4) des Luftfahrzeugs (100) eine größere Menge der zugeführten Luft zur Verfügung gestellt wird als einem Strömungsregelungssystem (5) des Luftfahrzeugs (100), und während der Start- und/oder Landungsbedingungen des Luftfahrzeugs (100) dem Strömungsregelungssystem (5) eine größere Menge der zugeführten Luft zur Verfügung gestellt wird als der Klimaanlage (4).

## Revendications

1. Une unité de génération d'air (1) pour un aéronef (100), comprenant :
- un moyen d'alimentation en air (2) ; et
- une unité de commande (3) ;
dans lequel le moyen d'alimentation en air (2) est configuré pour fournir de l'air à un système de climatisation (4) de la cabine d'un aéronef et à un système de régulation de débit (5) de l'aéronef (100) ; et dans lequel l'unité de commande (3) est configurée pour fournir, pendant des conditions de croisière de l'aéronef (100), une plus grande quantité de l'air fourni par le moyen d'alimentation en air (2) au système de climatisation (4) qu'au système de régulation de débit (5), et
pendant une période de décollage et/ou d'atterrissage de l'aéronef (100), une plus grande quantité de l'air fourni par le moyen d'alimentation en air (2) au système de régulation de débit (5) qu'au système de climatisation (4).

2. Unité de génération d'air (1) selon la revendication 1, dans laquelle l'unité de commande (3) est configurée pour fournir pendant des conditions de croisière entre 80 et 100 % de l'air au système de climatisation (4), de préférence entre 90 et 100 %, plus préférentiellement entre 95 et 100 %.

3. Unité de génération d'air (1) selon la revendication 1 ou 2, dans laquelle l'unité de commande (3) est configurée pour fournir pendant des conditions de décollage et/ou d'atterrissage entre 50 et 100 % de l'air au système de régulation de débit (5), de préférence entre 60 et 80 %, plus préférentiellement entre 65 et 75 %.

4. Unité de génération d'air (1) selon l'une quelconque des revendications précédentes, dans laquelle l'unité de commande (3) est configurée pour fournir pendant des conditions de décollage et/ou d'atterrissage entre 0 et 50 % de l'air au système de climatisation (4), de préférence entre 20 et 40 %, plus préférentiellement entre 25 et 35 %.

5. Unité de génération d'air (1) selon l'une quelconque des revendications précédentes, dans laquelle l'air fourni au système de climatisation (4) et/ou au système de régulation de débit (5) est de l'air sous pression.

6. Unité de génération d'air (1) selon la revendication précédente, dans laquelle l'air sous pression fourni au système de climatisation (4) est pressurisé dans une plage comprise entre 0 et 5 bars, de préférence entre 0 et 4 bars.

7. Unité de génération d'air (1) selon la revendication précédente, dans laquelle l'air sous pression fourni au système de régulation de débit (5) est pressurisé dans une plage comprise entre 0 et 5 bars, de préférence entre 0 et 4 bars.

8. Agencement de génération d'air (10) pour un aéronef (100), comprenant une unité de génération d'air (1) selon l'une des revendications précédentes et un système de régulation de débit (5) pour l'aéronef (100).

9. Agencement de génération d'air (10) selon la revendication précédente, dans lequel le système de régulation de débit (5) comprend un actionneur fluidique configuré pour fournir un écoulement d'air par rapport à une surface du profil aérodynamique (6).

10. Aéronef (100) comprenant :
- une cabine avec un système de climatisation (4),
- un profil aérodynamique (6) avec un système de régulation de débit (5), et
- une unité de génération d'air (1) selon l'une des revendications 1 à 7.

11. Aéronef (100) selon la revendication précédente, dans lequel le profil aérodynamique (6) est un volet, une aile, une ailette, un plan fixe vertical ou horizontal, un bec de bord d'attaque, une prise, une surface de commande, une surface de montage, un train d'atterrissage et/ou une partie de fuselage.

12. Aéronef (100) selon l'une quelconque des revendications précédentes, dans lequel au moins des parties du système de régulation de débit (5) sont agencées au niveau du profil aérodynamique (6).

13. Aéronef (100) selon l'une quelconque des revendications précédentes, dans lequel l'unité de génération d'air (1) est au moins partiellement agencée à proximité du système de régulation de débit (5), de préférence au niveau du profil aérodynamique (6) et/ou dans une zone de fuselage à proximité du profil aérodynamique (6).

14. Aéronef (100) selon l'une quelconque des revendications précédentes, dans lequel les moyens d'alimentation en air (2) sont alimentés en air par une entrée d'air (7) au niveau du profil aérodynamique (6).

15. Un procédé de fonctionnement d'une unité de génération d'air (1) dans un aéronef (100), comprenant une alimentation en air et une commande d'air pour fournir, pendant des conditions de croisière de l'aéronef (100), une plus grande quantité de l'air fourni à un système de climatisation (4) de l'aéronef (100) qu'à un système de régulation de débit (5) de l'aéronef (100), et
pendant des conditions de décollage et/ou d'atterrissage de l'aéronef (100), une plus grande quantité de l'air fourni au système de régulation de débit (5) qu'au système de climatisation (4).
